# EUROPÄISCHE PATENTSCHRIFT

(11) **EP 0 563 610 B1**
(45) Veröffentlichungstag und Bekanntmachung des Hinweises auf die Patenterteilung: **06.11.1996**
(21) Anmeldenummer: 93103455.7
(22) Anmeldetag: 04.03.1993
(51) Int. Cl.: F16C 11/06

(54) **Kugelgelenk für ein Kraftfahrzeug mit einem Haltering zur Befestigung des Dichtungsbalgs**
Balljoint for a motor vehicle with a support ring for the attachment of the bellows
Articulation à rotule pour un véhicule à moteur avec une bague de support pour la fixation du soufflet

(30) Priorität: 28.03.1992 DE 9204269 U
(43) Veröffentlichungstag der Anmeldung: 06.10.1993
(73) Patentinhaber: LEMFOERDER METALLWAREN AG., D-49441 Lemförde (DE)
(72) Erfinder: Richter, Reinhard, W-4508 Bohmte (DE); Bohne, Manfred, W-2844 Quernheim (DE)
(74) Vertreter: Bruse, Willy Hans Heinrich

(56) Entgegenhaltungen:
- DE-A- 3 418 805
- GB-A- 970 225
- GB-A- 2 158 892
- US-A- 5 066 159

## Beschreibung

Die Erfindung bezieht sich auf ein Kugelgelenk in einem Kraftfahrzeug nach dem Oberbegriff des Patentanspruches 1.

Aus der GB-A-1 477 649 ist ein gattungsgemäßes Kugelgelenk mit einem Haltering für die Befestigung des Dichtungsbalgs am Kugelzapfen eines Kugelgelenks bekannt. Der Haltering weist einen winkelförmigen oder einen u-förmigen Querschnitt auf. Auch in der DE-C-37 05 847 ist ein gattungsgemäßes Kugelgelenk mit einem solchen Haltering mit einem winkelförmigen Querschnitt für die Befestigung des Dichtungsbalgs am Kugelzapfen eines Kugelgelenks offenbart.

Das gehäuseseitige Ende des Dichtungsbalgs ist bei bekannten Ausführungen mit einem Randwulst unmittelbar in einer am Gehäuse umlaufend angeordneten Ausnehmung eingesetzt und darin durch einen Spannring befestigt. Durch axiale Bewegungen treten Verschleißerscheinungen am Dichtungsbalg auf. An nicht zylindrischen Anlageflächen sind Verspannungen möglich, so daß es insbesondere bei niedrigen Temperaturen zu Lebensdauereinschränkungen kommen kann. Bei bisherigen Ausbildungen sind auch nur begrenzte Bewegungsspielräume um die Gelenkkugel des Kugelgelenks realisierbar, da der Dichtungsbalg leicht aus seinem Befestigungssitz gleitet.

Aufgabe der Erfindung ist es, eine einfach herzustellende, kostengünstige und leicht montierbare Halterung des Dichtungsbalgs am Gehäuse eines Kugelgelenkes zu schaffen, die große Ausschläge des Kugelzapfens gegenüber der Längsachse des Kugelgelenks gestattet, ohne in der Dichtungsfunktion nachzulassen.

Die Erfindung löst diese Aufgabe durch die Ausbildung eines Kugelgelenks der eingangs genannten Gattung mit Merkmalen nach dem Kennzeichen des Patentanspruches 1.

Der Haltering wird mittels eines Mehrfachwerkzeuges aus einem Stück hergestellt. Dabei wird zunächst aus einem ebenen Blech ein kreisförmiges Teil ausgestanzt und anschließend gelocht. Das so entstandene Rohteil wird mittels mehrerer Preßvorgänge in die entsprechende Form gebracht. Als Material für den Haltering dienen weiche metallische Werkstoffe mit einem entsprechend geringen Kohlenstoffanteil.

Auf der Zeichnung ist ein Ausführungsbeispiel dargestellt. Es zeigen:
- Figur 1: einen teilweisen Längsschnitt durch ein Kugelgelenk in einer Mittelachsebene und
- Figur 2: eine vergrößerte Querschnittsdarstellung des Halteringes.

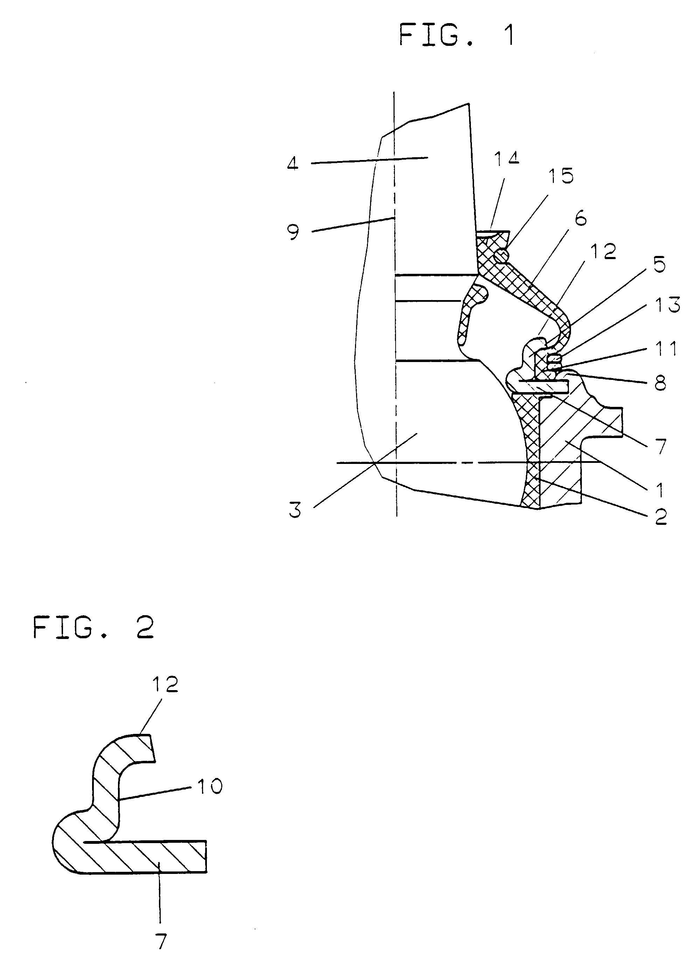

Das Kugelgelenk besteht aus dem Gehäuse 1, der darin angeordneten Gelenkschale 2 und der Gelenkkugel 3, welche an dem einen Ende eines Kugelzapfens 4 einstückig mit diesem ausgebildet ist. In das dem Kugelzapfen 4 zugewendete Ende des Gehäuses 1 ist ein Haltering 5 eingesetzt, welcher gleichzeitig zur Befestigung eines Dichtungsbalgs 6 aus elastisch verformbarem Werkstoff dient. Der Haltering 5 weist einen sich radial erstreckenden Flansch 7 auf, dessen Rand in eine ringförmige Innennut am Gehäuserand 8 eingreift und darin befestigt ist. Im Beispiel ist der Gehäuserand 8 nach innen eingerollt, so daß er den Rand des Radialflansches 7 am Haltering 5 übergreift. Auf der Außenseite des Flansches 7 geht der Haltering in eine sich etwa axial zur Gelenkmittelachse 9 erstreckende Zylinderfläche 10 über, die eine Anlage für einen Randwulst 11 am gehäuseseitigen Ende des Dichtungsbalgs 6 bildet. Im Anschluß an diese zylindrische Anlagefläche 10 weist der Haltering an dem dem Flansch 7 gegenüberliegenden Ende einen nach außen gekrümmten Rand 12 auf, so daß eine im Querschnitt etwa u-förmige Ausnehmung zur Aufnahme des Randwulstes 11 am Dichtungsbalg 6 gebildet wird. In dieser Ausnehmung des Halteringes 5 ist der Randwulst 11 des Dichtungsbalgs 6 mittels eines oder mehrerer Spannringe 13 befestigt. Zur Erzielung einer stabilen Bauform des Halteringes 5 aus einem weichen metallischen Werkstoff mit einem entsprechend geringen Kohlenstoffanteil wird der Ring mittels eines Mehrfachwerkzeuges aus einem Stück hergestellt, wobei zunächst aus einem ebenen Blech ein Rohling mit dem radialen Flansch und einer sich zur Innenseite hin erstreckenden Rückfaltung gebildet wird, an die sich dann der zylindrische Teil mit der Anlagefläche 10 anschließt, die dann in den gekrümmten Rand 12 übergeht, wie es deutlich in der Figur 2 dargestellt ist. Ein am zapfenseitigen Ende des Dichtungsbalgs 6 angeordneter Randwulst 14 ist mittels eines Spannringes 15 eng anliegend am Kugelzapfen 4 gehalten.

### BEZUGSZEICHENLISTE:

- 1: Gehäuse
- 2: Lagerschale
- 3: Gelenkkugel
- 4: Kugelzapfen
- 5: Haltering
- 6: Dichtungsbalg
- 7: Flansch
- 8: Gehäuserand
- 9: Gelenkmittelachse
- 10: Zylinderfläche
- 11: Randwulst
- 12: Rand
- 13: Spannring
- 14: Randwulst
- 15: Spannring

## Patentansprüche

1. Kugelgelenk für ein Kraftfahrzeug, welches ein Gehäuse (1), eine darin mittels einer Lagerschale (2) allseits beweglich gelagerte Gelenkkugel (3) eines Kugelzapfens (4) und einen Dichtungsbalg (6) umfaßt, wobei der mit dem einen Ende den Kugelzapfen (4) umschließende Dichtungsbalg (6) am anderen Ende zur Befestigung am Gehäuse (1) mit einem Randwulst (11) in ein komplementäres Querschnittsprofil eingreift und durch einen Spannring (13) gehalten ist, dadurch gekennzeichnet, daß der Randwulst (11) in ein Querschnittsprofil eines Halterings (5) eingreift und daß der Haltering (5) mit einem sich radial erstreckenden Flansch (7) in eine ringförmige Innennut am Rand des Gehäuses (1) dicht eingreift und eine sich etwa axial zur Gelenkmittelachse (9) erstreckende Zylinderfläche (10) zur Anlage des Randwulstes (11) aufweist.

2. Kugelgelenk nach Anspruch 1, dadurch gekennzeichnet, daß der Haltering im Anschluß an die zylindrische Anlagefläche (10) auf dem dem sich radial erstreckenden Flansch (7) gegenüberliegenden Ende einen nach außen gekrümmten Rand (12) aufweist.

3. Kugelgelenk nach den Ansprüchen 1 und 2, dadurch gekennzeichnet, daß der radiale Flansch (7) eines einstückigen Halteringes durch Bördelung im Gehäuse (1) befestigt ist.

4. Kugelgelenk nach den Ansprüchen 1 bis 3, dadurch gekennzeichnet, daß der sich radial erstreckende Flansch (7) mit einer Rückfaltung in den etwa zylindrischen Anlagebereich (10) für den Randwulst (11) des Dichtungsbalges (6) übergeht.

## Claims

1. Ball-and-socket joint for a motor vehicle, comprising a housing (1), a joint ball (3) of a ball pin (4), which ball is mounted in the housing by means of a bearing shell (2) so as to be mobile all-round, and a sealing bellows (6), wherein the sealing bellows (6), which embraces the ball pin (4) with one end, engages by way of an edge bead (11) at the other end in a complementary cross-sectional profile for attachment to the housing' (1) and is retained by a locking ring (13), characterised in that the edge bead (11) engages in a cross-sectional profile of a retaining ring (5), and that the retaining ring (5) tightly engages by way of a radially extending flange (7) in an annular inner groove at the edge of the housing (1) and comprises a cylindrical surface (10), which extends approximately axially to the centre joint axis (9), for the abutment of the edge bead (11).

2. Ball-and-socket joint according to claim 1, characterised in that, at the end which is opposite the radially extending flange (7), the retaining ring comprises an outward curved rim (12) adjoining the cylindrical abutment surface (10).

3. Ball-and-socket joint according to claims 1 and 2, characterised in that the radial flange (7) of a one-piece retaining ring is secured by beading in the housing (1).

4. Ball-and-socket joint according to claims 1 to 3, characterised in that the radially extending flange (7) passes into the approximately cylindrical abutment region (10) for the edge bead (11) of the sealing bellows (6) with a return fold.

## Revendications

1. Articulation à rotule pour un véhicule à moteur, qui comprend un boîtier (1), une rotule d'articulation (3) d'un pivot à rotule (4) qui est montée mobile de tous côtés dans ce boîtier au moyen d'une coquille de coussinet (2), et un soufflet d'étanchéité (6), le soufflet d'étanchéité (6), qui entoure par une de ses extrémités le pivot à rotule (4), s'engageant à l'autre extrémité, pour la fixation sur le boîtier (1), par un bourrelet marginal (11) dans un profil de section complémentaire et y étant maintenu par une bague de serrage (13), **caractérisée** en ce que le bourrelet marginal (11) s'engage dans un profil de section d'une bague de support (5), et en ce que la bague de support (5) s'engage hermétiquement, par une bride (7) s'étendant radialement, dans une rainure intérieure annulaire prévue sur le bord du boîtier (1), et présente une surface cylindrique (10), s'étendant approximativement dans la direction de l'axe médian (9) de l'articulation, pour l'application du bourrelet marginal (11).

2. Articulation à rotule selon la revendication 1, **caractérisée** en ce que la bague de support présente, en raccordement à la surface d'application cylindrique (10), sur l'extrémité opposée à la bride (7) s'étendant radialement, un bord (12) courbé vers l'extérieur.

3. Articulation à rotule selon les revendications 1 et 2, **caractérisée** en ce que la bride radiale (7) d'une bague de support d'un seul tenant est fixée par rabattement dans le boîtier (1).

4. Articulation à rotule selon les revendications 1 à 3, **caractérisée** en ce que la bride (7) s'étendant radialement se raccorde par un repliage à la région d'application approximativement cylindrique (10) pour le bourrelet marginal (11) du soufflet d'étanchéité (6).
